# EUROPEAN PATENT SPECIFICATION

(11) **EP 3 222 442 B1**
(45) Date of publication and mention of the grant of the patent: **12.12.2018**
(21) Application number: 15860259.9
(22) Date of filing: 06.10.2015
(51) Int. Cl.: B60C 13/00, B60C 5/01, B60C 5/00, B60C 13/02

(54) **PNEUMATIC TIRE**
LUFTREIFEN
PNEUMATIQUE

(30) Priority: 19.11.2014 JP 2014234890
(43) Date of publication of application: 27.09.2017
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2015/078386
(87) International publication number: WO 2016/080099

(56) References cited:
- EP-A1- 2 431 197
- EP-A1- 2 730 435
- WO-A1-2014/175084
- CN-A- 102 463 848
- JP-A- 2000 016 030
- JP-A- 2000 016 030
- JP-A- 2006 248 318
- JP-A- 2008 001 249
- JP-A- 2010 188 635
- JP-A- 2010 260 376
- JP-A- 2011 207 434
- JP-A- 2013 216 112
- JP-A- 2014 080 099
- JP-A- 2014 168 997
- US-A1- 2014 008 000

## Description

### Technical Field

The present invention relates to a pneumatic tire, and in particular relates to a pneumatic tire in which a tire frame member is formed using a resin material.

### Background Art

Pneumatic tires formed from rubber, organic fiber materials, and steel members are known. Recently, from the perspectives of reducing weight and facilitating recycling, there has been demand for the use of thermoplastic polymer materials such as thermoplastic elastomers (TPE) or thermoplastic resins to configure tire frame members. For example, Japanese Patent Application Laid-Open (JP-A) No. H03-143701 describes forming a pneumatic tire by employing a tire frame member formed by covering bead cores with a thermoplastic elastomer.

Reference is also made to WO 2014/175084 A1, which discloses a tire comprising a tire frame member made from a thermoplastic resin material, JP 2000-016030 A, which discloses a pneumatic radial tire comprising recessed portions on the outer surface of the sidewall portion, US 2014/008000 A1, which discloses a pneumatic tire unit and EP 2730435 A1, which discloses a pneumatic tire with excellent durability.

### SUMMARY OF INVENTION

### Technical Problem

In such tire frame members formed from resin materials, load is repeatedly input during vehicle travel, and in particular, tensile force acts on an outer surface of the tire. Relieving this tensile force improves the durability of the tire.

In consideration of the above circumstances, an object of the present invention is to lessen the load on a tire caused by tensile force acting on a tire outer surface.

### Solution to Problem

A pneumatic tire according to a first aspect of the present invention includes a tire frame member. The tire frame member is made from a thermoplastic resin or a thermoplastic elastomer, and includes a bead portion, a side portion that is continuous from a tire radial direction outer side of the bead portion, and a crown portion that is continuous from a tire width direction inner side of the side portion and on which a tread is disposed. The tire frame member is also formed with plural outer surface recesses on an outer surface of the side portion, the outer surface recesses being separated from each other in rows in the tire radial direction and in a tire circumferential direction. The outer surface recesses are covered by covering layers and filled with the covering layers, the covering layers being formed on an outer surface of the tire frame member from the bead portion to the tread.

According to the pneumatic tire of the first aspect, the plural outer surface recesses are separated from each other on the outer surface of the side portion. The outer surface recesses thereby facilitate deformation of the resin at the outer surfaces of the side portion. This relieves stress and strain caused by tensile force acting on the outer surface of the tire, thereby enabling the load on the tire frame member that is formed from a resin material to be lessened.

### Advantageous Effects of Invention

As described above, the pneumatic tire according to the present invention is capable of lessening load caused by tensile force acting on the outer surface of the tire.

### BRIEF DESCRIPTION OF DRAWINGS

Fig. 1 is a cross-section illustrating a pneumatic tire according to an exemplary embodiment of the present invention.
Fig. 2 is a partial perspective view illustrating a tire frame member of an exemplary embodiment of the present invention.
Fig. 3 is a partial side view illustrating a tire frame member of an exemplary embodiment of the present invention.
Fig. 4 is a cross-section taken along line A-Ain Fig. 3.
Fig. 5 is a partial cross-section illustrating a modified example of a tire frame member of an exemplary embodiment of the present invention.
Fig. 6 is a partial side view illustrating a modified example of a tire frame member of an exemplary embodiment of the present invention.
Fig. 7 is a partial side view illustrating another modified example of a tire frame member of an exemplary embodiment of the present invention.

### DESCRIPTION OF EMBODIMENTS

In the following explanation, exemplary embodiments are used to explain implementation of the present invention. In the drawings, the arrow W indicates a tire axial direction, the arrow R indicates a tire radial direction extending from a tire axis (not illustrated in the drawings) in a radial direction of the tire, and the arrow C indicates a tire circumferential direction.

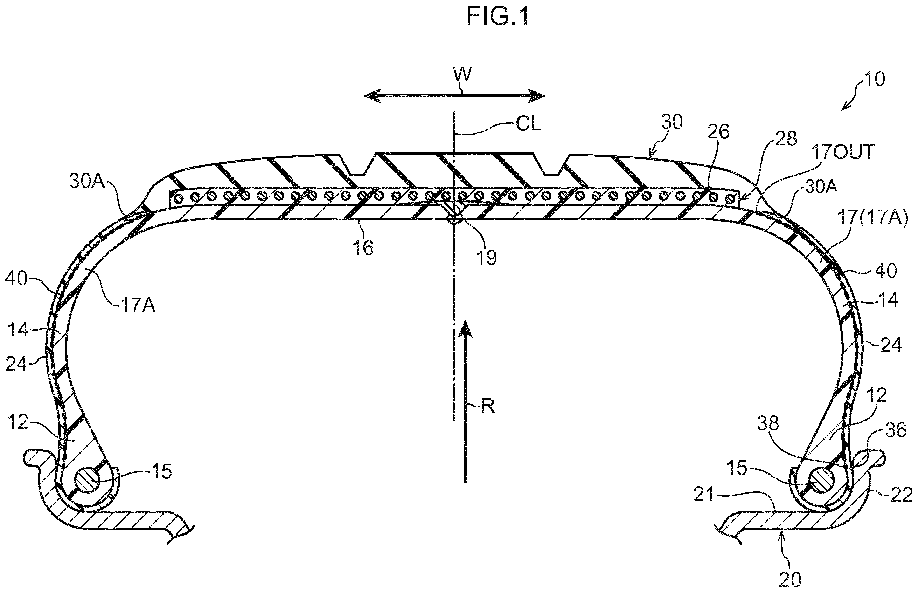

As illustrated in Fig. 1, a pneumatic tire of the present exemplary embodiment is a tire employed internally filled with air. A pneumatic tire 10 includes a circular tire frame member 17. The tire frame member 17 includes a pair of bead portions 12, side portions 14 extending from the respective bead portions 12 toward a tire radial direction outside, and a crown portion 16 coupling together both tire radial direction outside ends of the respective side portions 14. Note that the bead portions refer to portions spanning from tire radial direction inside ends up to 30% of the cross-sectional height of the tire. The pair of bead portions 12 make close contact with bead seats 21 and rim flanges 22 of a rim 20 so as to maintain the internal pressure of the air-filled tire. Note that boundary portions where the bead portions 12 come away from the rim 20 are referred to as separation points 36, these being points where the tire separates from the rim flanges when the tire is fitted to the specified rim according to the dimension of the tire as listed in the 2013 edition of the Japan Automobile Tire Manufacturers' Association (JATMA) YEAR BOOK, in an unloaded state at the internal pressure specified therein. Positions corresponding to the separation points 36 on an outer surface of the tire frame member 17 configure case separation points 38. A tread member 30 configuring a tire tread, this being a portion where the tire contacts the ground, is disposed at the tire radial direction outside of the crown portion 16.

The tire frame member 17 is made of a resin, and is formed from a resin material as the main material. Note that here, "resin material" does not include vulcanized rubber. Resin material is a thermoplastic resin or a thermoplastic elastomers.

Thermoplastic resins (including thermoplastic elastomers) are polymer compounds of materials that soften and flow with increased temperature, and that adopt a relatively hard and strong state when cooled. In the present specification, out of these, distinction is made between thermoplastic elastomers, these being polymer compounds that soften and flow with increasing temperature, that adopt a relatively hard and strong state on cooling, and that have a rubber-like elasticity, and non-elastomer thermoplastic resins, these being polymer compounds that soften and flow with increasing temperature, that adopt a relatively hard and strong state on cooling, and do not have a rubber-like elasticity.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinked-type thermoplastic elastomers (TPV), as well as thermoplastic polyolefin-based resins, thermoplastic polystyrene-based resins, thermoplastic polyamide-based resins, thermoplastic polyester-based resins, and the like.

Moreover, the thermoplastic resin material mentioned above has, for example, the characteristics of a deflection temperature under load (when loaded at 0.45 MPa) as defined by ISO 75-2 or ASTM D648 of 78°C or greater, a tensile yield strength as defined by JIS K7113 of 10 MPa or greater, and tensile elongation at break, likewise defined by JIS K7113, of 50% or greater. A thermoplastic resin material having a Vicat softening temperature, as defined by JIS K7206 (method A), of 130°C or greater, may be employed.

Thermoset resins are polymer compounds that cure to form a three-dimensional mesh structure with increasing temperature. Examples of thermoset resins include phenolic resins, epoxy resins, melamine resins, and urea resins.

In addition to the thermoplastic resins (including thermoplastic elastomers) and thermoset resins already listed above, general-purpose resins such as (meth)acrylic-based resins, EVA resins, vinyl chloride resins, fluororesins, and silicone-based resins may also be employed as the resin material.

In the present exemplary embodiment, explanation is given regarding a case in which the tire frame member 17 is formed from a thermoplastic resin.

The tire frame member 17 is formed by aligning circular tire frame halves 17A, each integrally molded in the same shape and including a single bead portion 12, a single side portion 14, and a half-width crown portion 16, and bonding the tire frame halves 17A together at a tire equatorial plane CL portion. A thermoplastic welding resin material 19 is used when bonding at the tire equatorial plane CL portion. Note that there is no limitation to forming the tire frame member 17 by bonding together two members, and the tire frame member 17 may be formed by bonding together three or more members, or may be integrally molded with a pair of the bead portions 12, a pair of the side portions 14, and the crown portion 16.

Note that the side portion of the present specification refers to a portion spanning from the bead portion to a tread end. The "tread end" refers to the outermost ground contact portion in the tire width direction when the tire is fitted to a standard rim, as defined in the JATMA YEAR BOOK (2014 edition, Japan Automobile Tire Manufacturers Association standards), inflated to an internal pressure of 100% air pressure (maximum air pressure) corresponding to the maximum load capacity (load shown in bold in the internal pressure-load capacity correspondence table) for the applicable JATMA YEAR BOOK size/ply rating, and loaded to the maximum load capacity. In cases in which the location of use or manufacturing location falls under TRA standards or ETRTO standards, then the respective standards are adhered to.

The tire frame halves 17A formed using a thermoplastic material may, for example, be molded by vacuum molding, pressure forming, injection molding, melt casting, or the like, enabling the manufacturing process to be greatly simplified and enabling molding time to be reduced in comparison to cases in which the tire frame halves 17A are molded (vulcanized) using rubber. Note that even in cases in which the tire frame member 17 is configured from a single thermoplastic material, a thermoplastic material may be employed that has different characteristics at each location of the tire frame member 17 (the side portions 14, the crown portion 16, the bead portions 12, and the like), similarly to in general rubber pneumatic tires hitherto.

Annular shaped bead cores 15 are embedded in the bead portions 12 of the tire frame member 17. The bead cores 15 are configured from steel cords, similarly to in general pneumatic tires hitherto. Note that the bead cores 15 may be omitted if the rigidity of the bead portions 12 is secured and there are no issues with fitting to the rim 20. Moreover, the bead cores 15 may be formed by cords configured by materials other than steel, such as organic fiber cords or resin-coated organic fiber cords. Moreover, instead of using cords, the bead cores 15 may be formed from a hard resin using injection molding or the like.

A reinforcing layer 28 including steel cords 26 wound on in a spiral shape is embedded in the crown portion 16 of the tire frame member 17. The reinforcing layer 28 corresponds to a belt disposed at an outer circumferential surface of the carcass of rubber pneumatic tires hitherto.

Covering layers 24 are formed on the outer surface of the tire frame member 17 from the bead portions 12 to the tread member 30. A bead portion 12 side end portion of each covering layer 24 is disposed so as to reach further to the tire inside than the close contact portion between the bead portion 12 and the rim 20. The covering layers 24 also fill outer surface recesses 40, described later. Note that the covering layers 24 may be formed from a resin or from rubber. Examples of resin materials include thermoplastic resins (including thermoplastic elastomers), thermosetting resins, and other general resins, as well as engineering plastics (including super engineering plastics).

The tread member 30 is disposed at the tire radial direction outside of the tire frame member 17. The tread member 30 is disposed along the tire frame member 17, and configures a tire tread, this being a ground contact portion of the tire 10. The tread member 30 is formed from a rubber that has superior anti-wear characteristics to the thermoplastic resin used to form the tire frame member 17. The rubber employed in the tread member 30 may be the same type of rubber as that employed in rubber pneumatic tires hitherto. Note that the tread member 30 may also be configured by another type of thermoplastic resin that has superior anti-wear characteristics to the thermoplastic resin used to form the tire frame member 17.

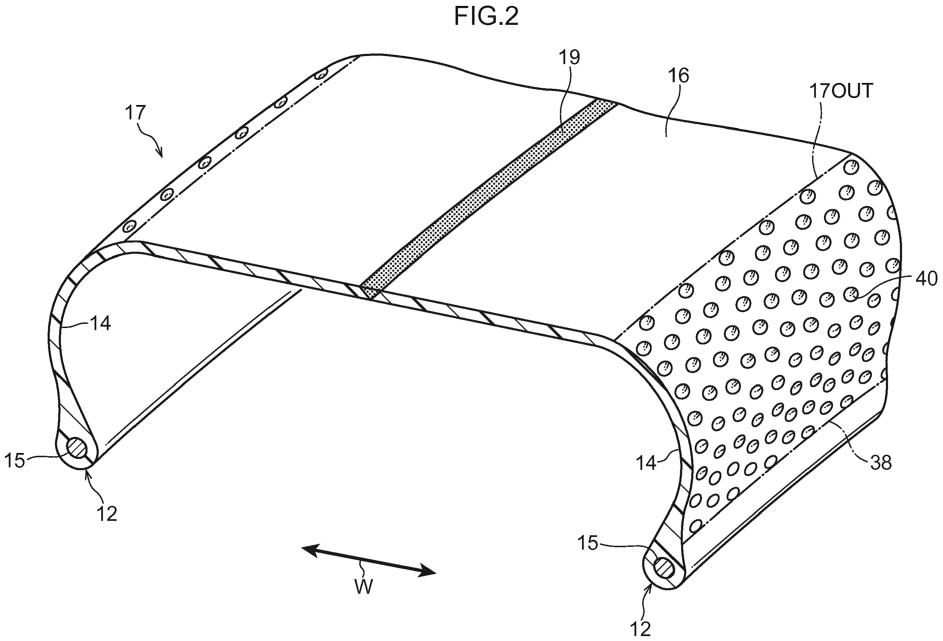

As illustrated in Fig. 2, plural of the outer surface recesses 40 are formed in tire outer surfaces 17OUT of the tire frame member 17. The plural outer surface recesses 40 are formed over the entirety of regions spanning from the respective case separation points 38 corresponding to the separation points 36 of the bead portions 12 from the rim flanges 22, as far as positions of the outer surface 17OUT corresponding to tread ends 30A, these being the tire width direction W outside ends of the tread member 30. The outer surface recesses 40 are arranged in rows along the tire radial direction R and a tire circumferential U direction. The reason for not forming the outer surface recesses 40 further to the tire radial direction inside than the case separation points 38 is that there is hardly any deformation of the tire here, and thus there is little need to form the outer surface recesses 40. Moreover, the reason for not forming the outer surface recesses 40 further to the tire axial direction inside (closer to the tire equatorial plane CL side) than the tread end 30A is that the tread member 30 is disposed here. The rigidity of the tire frame member 17 can be maintained by not forming the outer surface recesses 40 at portions that are comparatively less affected by load application (portions that do not deform readily).

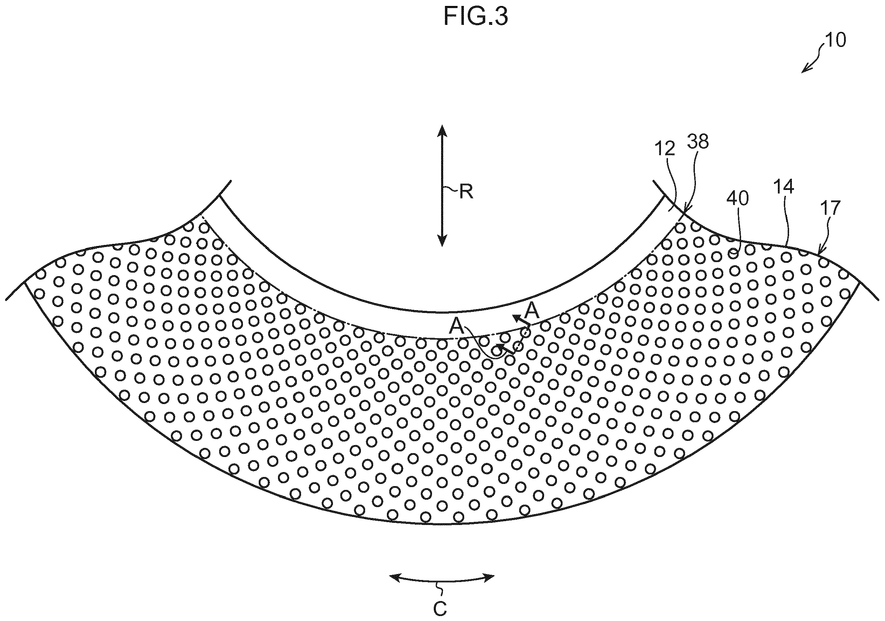

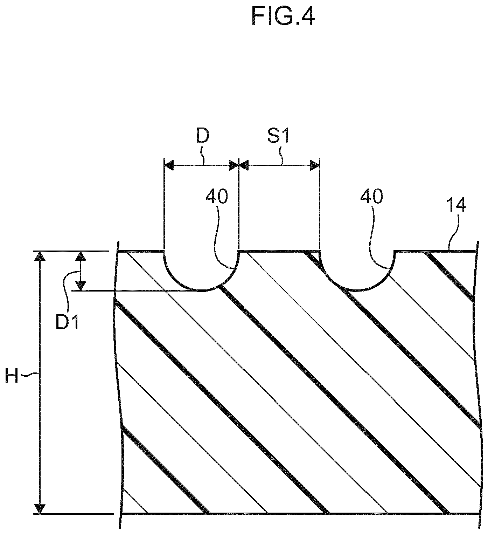

As illustrated in Fig. 3 and Fig. 4, each of the outer surface recesses 40 is configured by a substantially hemispherical recess. Adjacent outer surface recesses 40 are formed spaced apart from each other. The outer surface recesses 40 are formed over the entire outer surfaces of the side portions 14 of the tire frame member 17, and are formed over part of the outer surfaces of the bead portions 12.

As illustrated in Fig. 4, out of adjacent outer surface recesses 40, the outer surface recesses 40 disposed at positions closest to each other are separated by a spacing S1. Note that the spacing S1 becomes longer the further the outer surface recesses 40 are disposed toward the tire radial direction outside. The outer surface recesses 40 are covered by the respective covering layers 24.

Forming the outer surface recesses 40 in this manner relieves stress and strain caused by tensile force acting on the outer surface of the tire, thereby enabling the load on the tire frame member 17 that is formed from a resin material to be lessened.

Moreover, even should cracks occur on the outer surface of the side portions 14, development of the cracks can be suppressed due to disposing the outer surface recesses 40 at a separation from one another.

Moreover, since the outer surface recesses 40 are substantially hemispherical in shape, they are non-anisotropic, and are capable of relieving stress and strain caused by tensile force in a well-balanced manner. Note that the outer surface recesses 40 may also be configured so as to be non-anisotropic and capable of relieving stress and strain caused by tensile force in a well-balanced manner by being configured with spherical surface profiles configuring part of the surface of a sphere.

Note that the outer surface recesses 40 may be formed over the entirety of the regions from the case separation points 38 to the tread ends 30A, or may be formed over part of these regions. The outer surface recesses 40 are preferably formed at least within 30% of the tread end 30A side in the regions from the case separation points 38 to the tread ends 30A. This is since positions that are close to the tread ends 30A act as boundaries of the ground contact portion during vehicle travel and are subjected to a large load.

Moreover, the outer surface recesses 40 are preferably formed along the entire tire circumferential direction in order to give the tire outer surface 17OUT a uniform profile in the tire circumferential direction.

Moreover, a depth D1 (depth at the deepest part) of the outer surface recesses 40 is preferably 0.1 mm or greater. This is since there is little stress-relieving effect at less than 0.1 mm. Moreover, the depth D1 is preferably no more than 1/2 of an average thickness H of the side portions 14. This is since the strength of the tire frame member 17 becomes insufficient when in excess of 1/2 the average thickness of the side portions 14.

Moreover, an opening (opening width) diameter D of the outer surface recesses 40 is preferably from 0.1 mm to 10.0 mm. This is since there is little stress-relieving effect if the diameter D is below 0.1 mm, and the strength of the tire frame member 17 becomes insufficient if the diameter D is greater than 10.0 mm.

Moreover, the spacing S1 between adjacent outer surface recesses 40 is preferably from 0.1 mm to 10.0 mm. This is since at less than 0.1 mm, processing (manufacture) of the outer surface recesses 40 becomes difficult, while there is little stress-relieving effect when in excess of 10.0 mm.

The outer surface recesses 40 may be formed by forming projections for the outer surface recesses 40 on a corresponding portion of a mold used in injection molding of the tire frame member 17. The outer surface recesses 40 may also be formed by processing after the tire frame member 17 has been injection molded.

As described above, the pneumatic tire 10 of the present exemplary embodiment is formed with the outer surface recesses 40 on the tire outer surface of the tire frame member 17. This facilitates deformation of the resin at the outer surface of the tire frame member 17, thereby enabling stress and strain caused by tensile force acting on the outer surface of the tire frame member 17 to be relieved and enabling load to be lessened.

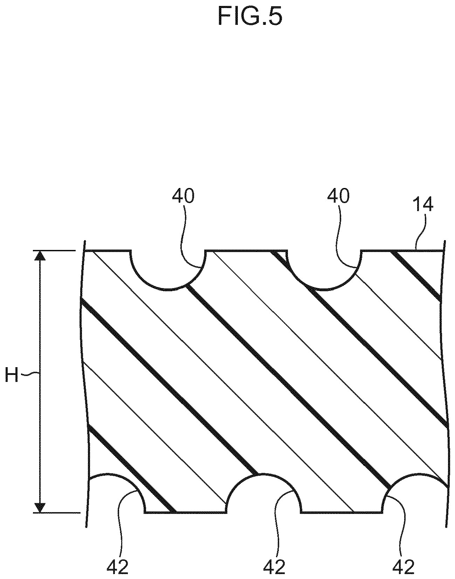

Note that in the present exemplary embodiment the outer surface recesses 40 are only formed to the outer surface of the tire frame member 17. However, inner surface recesses 42 may also be formed at an inner surface of the tire frame member 17. In such cases, as illustrated in Fig. 5, the inner surface recesses 42 are formed to the tire frame member 17 at positions that do not overlap with the outer surface recesses 40, namely at portions of the inner surface side where the outer surface recesses 40 are not formed in the thickness direction of the tire frame member 17.

In this manner, forming the inner surface recesses 42 facilitates deformation of the resin at the inner surface of the tire frame member 17, thereby enabling stress and strain caused by compression force acting on the inner surface to be relieved, and enabling load on the tire frame member 17 to be lessened further. Moreover, since the inner surface recesses 42 are formed at positions that do not overlap with the outer surface recesses 40, locations where the thickness of the tire frame member 17 becomes excessively thin are not formed, enabling a reduction in strength to be suppressed.

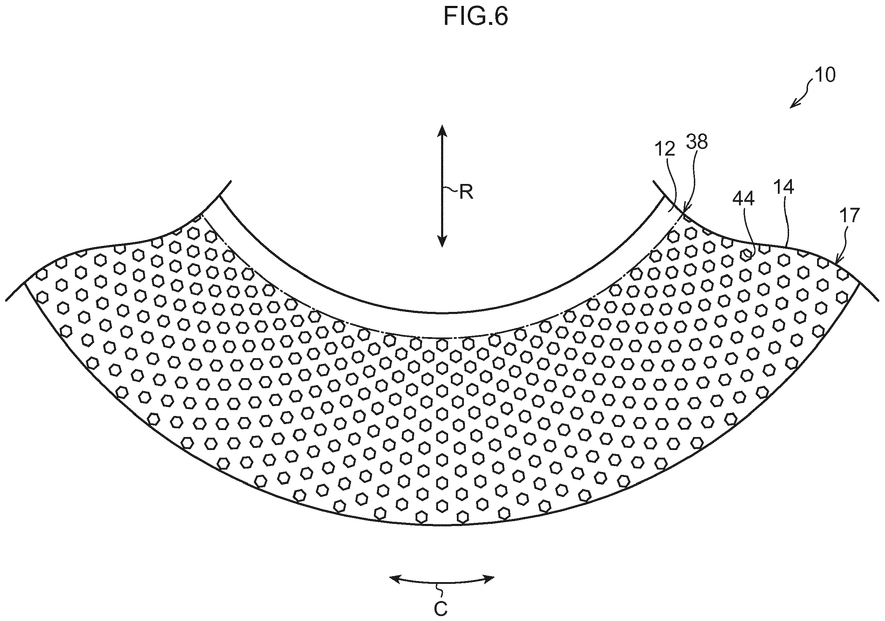

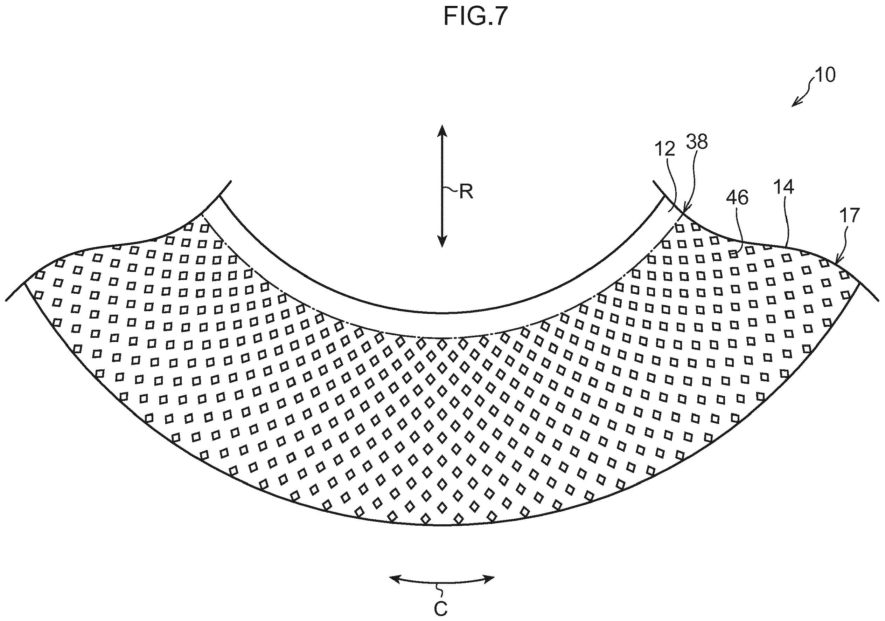

In the present exemplary embodiment, explanation has been given regarding an example in which the outer surface recesses are substantially hemispherical in shape. However, there is no requirement for the outer surface recesses to be substantially hemispherical in shape. For example, as illustrated in Fig. 6, configuration may be made with hexagonal outer surface recesses 44 having substantially hexagonal shapes. Moreover, as illustrated in Fig. 7, configuration may be made with diamond-shaped outer surface recesses 46 having diamond shapes.

## Claims

1. A pneumatic tire (10), comprising a tire frame member (17), wherein the tire frame member (17):
is made from a thermoplastic resin or a thermoplastic elastomer;
includes a bead portion (12), a side portion (14) that is continuous from a tire radial direction (R) outer side of the bead portion (12), and a crown portion (16) that is continuous from a tire width direction (W) inner side of the side portion (14) and on which a tread is disposed; and
is formed with a plurality of outer surface recesses (40) on an outer surface of the side portion (14), the outer surface recesses (40) being separated from each other in rows in the tire radial direction and in a tire circumferential direction, **characterized in that**
the outer surface recesses (40) are covered by covering layers (24) and filled with the covering layers (24), the covering layers (24) being formed on an outer surface of the tire frame member (17) from the bead portion (12) to the tread.

2. The pneumatic tire (10) of claim 1, wherein a plurality of inner surface recesses (42) are formed on an inner surface of the side portion (14), so as to be separated from each other, at positions that do not overlap with the outer surface recesses (40).

3. The pneumatic tire (10) of either claim 1 or claim 2, wherein the outer surface recesses (40) have a spherical surface profile.

4. The pneumatic tire (10) of any one of claim 1 to claim 3, wherein the outer surface recesses (40) have a depth that is 0.1 mm or greater but not more than one-half of a thickness of the side portion (14).

5. The pneumatic tire (10) of any one of claim 1 to claim 4, wherein each of the outer surface recesses (40) has a maximum opening width of from 0.1 mm to 10.0 mm.

6. The pneumatic tire (10) of any one of claim 1 to claim 5, wherein a minimum distance between adjacent outer surface recesses (40) is from 0.1 mm to 10.0 mm.

## Patentansprüche

1. Luftreifen (10), umfassend ein Reifenrahmenelement (17), wobei das Reifenrahmenelement (17):
aus einem thermoplastischen Harz oder einem thermoplastischen Elastomer hergestellt ist;
einen Wulstabschnitt (12), einen Seitenabschnitt (14), der von einer in Reifenradialrichtung (R) äußeren Seite des Wulstabschnitts (12) kontinuierlich ist, und einen Kronenabschnitt (16), der von einer in Reifenbreitenrichtung (W) inneren Seite des Seitenabschnitts (14), auf dem die Lauffläche angeordnet ist, kontinuierlich ist, beinhaltet und
mit einer Vielzahl von Außenflächenaussparungen (40) auf einer Außenfläche des Seitenabschnitts (14) ausgebildet ist, wobei die Außenflächenaussparungen (40) in Reihen, in der Reifenradialrichtung und in einer Reifenumfangsrichtung voneinander getrennt sind, **dadurch gekennzeichnet, dass**
die Außenflächenaussparungen (40) durch Deckschichten (24) abgedeckt und mit den Deckschichten (24) gefüllt sind, wobei die Deckschichten (24) auf einer Außenfläche des Reifenrahmenelements (17) vom Wulstabschnitt (12) bis zur Lauffläche gebildet sind.

2. Luftreifen (10) nach Anspruch 1, wobei eine Vielzahl von Innenflächenaussparungen (42) auf einer Innenseite des Seitenabschnitts (14) gebildet werden, so dass sie an Positionen, die sich nicht mit den Außenflächenaussparungen (40) überlappen, von einander getrennt sind.

3. Luftreifen (10) nach Anspruch 1 oder Anspruch 2, wobei die Außenflächenaussparungen (40) ein kugelförmiges Oberflächenprofil aufweisen.

4. Luftreifen (10) nach einem der Ansprüche 1 bis 3, wobei die Außenflächenaussparungen (40) eine Tiefe von 0,1 mm oder mehr aufweisen, jedoch nicht mehr als eine Hälfte einer Dicke des Seitenabschnitts (14).

5. Luftreifen (10) nach einem der Ansprüche 1 bis 4, wobei jede der Außenflächenaussparungen (40) eine maximale Öffnungsweite von 0,1 mm bis 10,0 mm aufweist.

6. Luftreifen (10) nach einem der Ansprüche 1 bis 5, wobei ein minimaler Abstand zwischen benachbarten Außenflächenaussparungen (40) 0,1 mm bis 10,0 mm beträgt.

## Revendications

1. Bandage pneumatique (10), comprenant un élément châssis (17), l'élément châssis (17):
étant constitué d'une résine thermoplastique ou d'un élastomère thermoplastique ;
incluant une partie de talon (12), une partie latérale (14) qui est continue à partir d'un côté extérieur dans la direction radiale du pneu (R) de la partie de talon (12), et une partie sommet (16) qui est continue à partir d'un côté interne dans la direction de largeur du pneu (W) de la partie latérale (14) et sur laquelle une bande de roulement est disposée ; et
étant formé d'une pluralité d'évidements de surface externe (40) sur une surface externe de la partie latérale (14), les évidements de surface externe (40) étant séparés l'un de l'autre en des rangées dans la direction radiale du pneu et dans une direction circonférentielle du pneu, **caractérisé en ce que**
les évidements de surface externe (40) sont recouverts par des couches de couverture (24) et remplis par les couches de couverture (24), les couches de couverture (24) étant formées sur une surface externe de l'élément châssis (17) de la partie de talon (12) à la bande de roulement.

2. Bandage pneumatique (10) selon la revendication 1, dans lequel plusieurs évidements de surface interne (42) sont formés sur une surface interne de la partie latérale (14), de façon à ce qu'ils soient séparés l'un de l'autre, à des positions qui ne se chevauchent pas avec les évidements de surface externes (40).

3. Bandage pneumatique (10) selon la revendication 1 ou la revendication 2, dans lequel les évidements de surface externe (40) ont un profil de surface sphérique.

4. Bandage pneumatique (10) selon l'une quelconque des revendications 1 à 3, dans lequel les évidements de surface externe (40) ont une profondeur de 0,1 mm ou plus mais pas plus qu'une moitié d'une épaisseur de la partie latérale (14).

5. Bandage pneumatique (10) selon l'une quelconque des revendications 1 à 4, dans lequel chacun des évidements de surface externe (40) a une largeur d'ouverture maximale de 0,1 mm à 10,00 mm.

6. Bandage pneumatique (10) selon l'une quelconque des revendications 1 à 5, dans lequel une distance minimale entre des évidements de surface externe adjacents (40) est de 0,1 mm à 10,0 mm.
